# EUROPEAN PATENT APPLICATION

(11) **EP 4 325 038 A1**
(43) Date of publication of application: **21.02.2024**
(21) Application number: 21936847.9
(22) Date of filing: 12.04.2021
(51) Int. Cl.: F02C 7/25, B32B 5/26, B32B 19/02, F16L 59/02, A62C 3/08

(54) **MULTI-LAYER STRUCTURE FOR A BARRIER TO PROTECT AGAINST FIRE AND HEAT STRESS**

(71) Applicant: Asociacion de la Industria Navarra (AIN), 31191 Cordovilla (Navarra) (ES); Sogeclair Aerospace, S.A., 28906 Getafe (Madrid) (ES)
(72) Inventor: MARTÍN JULIÁN, Luis Francisco, 31191 Cordovilla (Navarra) (ES); MEDRANO FERNÁNDEZ, Angel, 31191 Cordovilla (Navarra) (ES); LARUMBE ABUIN, Silvia, 31191 Cordovilla (Navarra) (ES); GARCÍA FUENTES, Gonzalo, 31191 Cordovilla (Navarra) (ES); LÓPEZ MARTÍNEZ, Félix Ramón, 28906 Getafe (Madrid) (ES); LAMBERT, Balfour, 28906 Getafe (Madrid) (ES)
(74) Representative: Cabinet Beau de Loménie
(86) International application number: PCT/ES2021/070236
(87) International publication number: WO 2022/219204

(57) **Abstract**

The present invention relates to a multilayer structure with at least one inner layer of alkaline earth silicate mineral wool soluble fibre paper (AES paper) and an outer layer of alkaline earth silicate mineral wool (AES wool), as well as to the use thereof as a barrier to protect against fire and heat stress.

## Description

### Technical field

The present invention relates to a multilayer structure and the use thereof as a barrier to protect against fire and heat stress, with applications in aircraft, as well as in any means of transport or stationary device in which there are heat and fire protection requirements that are concurrent with those for weight containment.

### State of the art

For many years, the aeronautical industry has been developing strategies to reduce weight in aircraft in order to reduce their fuel consumption or increase their payload.

One of these lines of work is the replacement of metal in primary and secondary structures with material that is mainly made up of carbon fibre reinforced plastics (CFRP), other plastics or even lighter metals than those being currently used. Today, significant progress has been made in this strategy, and there are numerous parts of an aircraft (planes, helicopters, others) that are designed and built, for example, with CFRP. In addition, CFRP offers other advantages such as fatigue strength, which can be higher than that of conventional metals such as titanium.

However, there are certain structures that resist being manufactured in CFRP or other lighter materials because in the areas where they are located, fire or overheating situations may occur that quickly degrade said material and therefore cause damage to the aircraft, with the consequent danger to the structural integrity thereof. One of these structures is, for example, the engine deck in helicopters. This deck is a structure that houses the helicopter's engines and supports same above the crew cabin. This structure is therefore of the primary type, so that a significant loss of mechanical or structural resistance would entail a fatal accident for the aircraft.

Fire or in-flight fire events in the engine area are rare, but frequent enough for this deck to be manufactured today in metal that is capable of resisting the heat impact of a liquid fuel flame. With the technology available until now, it was not possible to implement this deck in CFRP or other lighter materials since fire would quickly degrade the same (structurally and mechanically), generating a clear risk situation for the survival of the aircraft.

A possible route for this or another similar application would be the formulation of plastics having high resistance to fire and high temperatures. However, there are no successful results with this line of work to date. Furthermore, the cost of certification of new plastics for use thereof in structural parts represents a cost that clearly conditions their application.

The alternative proposed by the present invention consists of coating base materials such as CFRP, the format of which can be in sheets or in any other assembly, with fireproof, flame resistant and heat insulating layers. This alternative could also be applied to other base materials that are highly sensitive to heat changes, such as some metal alloys or other plastics in general.

There are different types of materials that fulfil this type of functionality, and that can be found in sheet formats. For example, the so-called rock wool consists of mixed oxides of silicon, aluminium and other materials. Similarly, materials commonly called alkaline earth silicates (AES) exhibit good flame resistance and heat insulation properties.

However, mere flame resistance is not enough to protect a structural material based on, for example, CFRP. Indeed, in fire resistance tests under standard (as in ISO2685 in order to comply with aeronautical standards such as CS29, CS25 and others), the use of these materials alone does not guarantee comprehensive protection of the plastic material. This is due to the fact that the test conditions imposed in the ISO2685 aeronautical standard are extremely demanding for the materials. Thus, the fuel that feeds the flame must be kerosene, the flame must maintain a temperature of 1100 °C ± 80 °C and provide a heat flux of 116 kW/m2 (10.21 BTU/ft² s). In addition, during the test which runs at least for 15 minutes, the parts must be subjected to intense vibration of 0.8 mm amplitude and 50 Hz frequency.

Under these conditions, most of the materials tested as a protective barrier either fail to protect the CFRP structure, causing the latter to burn, or are not capable of maintaining the temperature of the structure they protect below adequate safety levels that allow the materials not to be damaged or simply to remain functional. For example, common CFRP materials used in aeronautical structures such as Hexcel M18 or M21 have their mechanical resistance reduced by a factor of 2-3 when reaching temperatures of 150 °C. If their temperature exceeds 180 °C, they also suffer degradation due to mass loss.

The main causes of failure are mainly due to:
1) Low thickness of the protective material used.
2) Insufficient heat insulation capacity
3) Dismemberment or breakdown of the protective material due to vibration.

A possible solution would be to increase the amount of thickness of the protective material. However, excess thickness compromises mechanical stability during vibration, and would further add additional weight to the structure, attenuating the advantages provided by lighter materials such as CFRP on metal.

The argument presented up to this point has dealt in detail with the case of structure protection primarily in CFRP in the context of the engine area in aeronautical applications. However, the invention can by the same logic be applied to any industrial environment in which a structure has been designed with a heat and fire sensitive material for an installation close to a heat source and/or with a fire risk.

For example, in systems for the storage of new fuels such as hydrogen based on composite material, or systems such as auxiliary power units (APU), it is desirable to reduce weight, as well as maintain high protection against fires or heat peaks.

### Object of the invention

The present invention provides a multilayer structure that combines the properties of the sheets being used, and synergistically multiplies their effect as a protective barrier.

In a first aspect, the present invention relates to a multilayer structure to protect against fire and heat stress applied on a substrate or base such as a reinforced plastic or metal in the form of a sheet or parts of structure, which comprises at least a first inner layer of alkaline earth silicate mineral wool soluble fibre paper (AES-paper) and an outer layer of alkaline earth silicate mineral wool (AES-wool); wherein the first inner layer has a thickness greater than or equal to 2 mm, a density less than or equal to 0.20 g/cm³ and a heat conductivity less than 0.1 W/m.K; and the outer layer has a thickness greater than or equal to 10 mm, a density less than or equal to 0.12 g/cm³ and a heat conductivity less than 0.1 W/m.K.

The alkaline earth silicate mineral wool soluble fibre paper (AES-paper) used in the present invention is a commercial mineral wool having a similar composition to alkaline earth silicate mineral wool (AES) as detailed below, but in compressed format. To do this, organic binding substances are added. The density of this material is preferably 0.20 g/cm³.

The alkaline earth silicate mineral wool (AES-wool) used in the present invention is a commercial mineral wool of silicates combined with alkaline earth oxides (magnesium and/or calcium). In particular, it has a density of 0.09-0.12 gr/cm³, a heat conductivity of 0.08-0.220 W/m×K and exhibits no toxicity because it is a bio-resorbable substance. It can be supplied in sheet formats between 10 mm and 50 mm thick.

Both thickness, density, and heat conductivity are essential factors for solving the problem being addressed by the present invention. So both the thickness, density, and heat conductivity must be those indicated above. The fact of adding more thickness of a single material does not guarantee the anti-fire requirement in conjunction with the aim of obtaining a limited weight. Moreover, heat conductivity only depends on the composition of the material, as well as the structure thereof (more porous, less porous) and not on the thickness.

Therefore, what provides the solution to the problem is the appropriate combination of the different layers of the multilayer structure in a specific order and thickness.

Preferably, the multilayer structure described above comprises a second inner layer of soluble alkaline earth silicate mineral wool soluble fibre paper (AES-paper).

Preferably, the second inner layer of alkaline earth silicate mineral wool soluble fibre paper (AES-paper) of the multilayer structure is located between the first inner layer of alkaline earth silicate mineral wool soluble fibre paper (AES-paper) and the outer layer of alkaline earth silicate mineral wool (AES-wool).

Preferably, the thickness of each inner layer of alkaline earth silicate mineral wool soluble fibre paper (AES-paper) is between 2 and 10 mm and even more preferably between 3 and 6 mm.

Preferably, the thickness of the outer layer of alkaline earth silicate mineral wool (AES-wool) is between 10 and 30 mm, and even more preferably between 15 and 25 mm.

According to the invention, the multilayer structure preferably comprises at least one bonding layer between the different layers and the structure or base to be protected. Said bonding layer will preferably be in the form of a high temperature epoxy resin binder, and more preferably a flame retardant epoxy binder.

According to a particular aspect of the invention to provide a barrier to protect against fire at the bond between at least two multilayer structures as defined above, a bonding structure is provided such that at least one of the respective inner and/or outer layers of one of the multilayer structures overlaps the bond between multilayer structures of the lower layer. So that heat transmission through the bonds between layers is prevented.

In the event that the bond of the multilayer structure defined above with an inclined panel, preferably vertical, or the bond of at least two multilayer structures with the inclined panel occurs, at least one inner layer of the multilayer structure is folded at an angle according to the angle of the inclined panel for its overlap with said panel. This arrangement prevents heat transmission through the bond of the layers with the panel, which in combination with the overlap between inner layers prevents heat transmission through said bonds.

According to another aspect of the invention, for bonding an iron fitting to the multilayer structure as per the invention a bonding structure for bonding the iron fitting is provided which comprises the multilayer structure and a ceramic bushing passing through the layers of the multilayer structure and the base or structure for placing a fixing bolt for fixing the iron fittings.

### Brief description of the figures

To complement the description and in order to help make the features of the invention more readily understandable, a set of drawings is attached as an integral part of said description wherein, for illustrative and non-limiting purposes, the following has been represented:

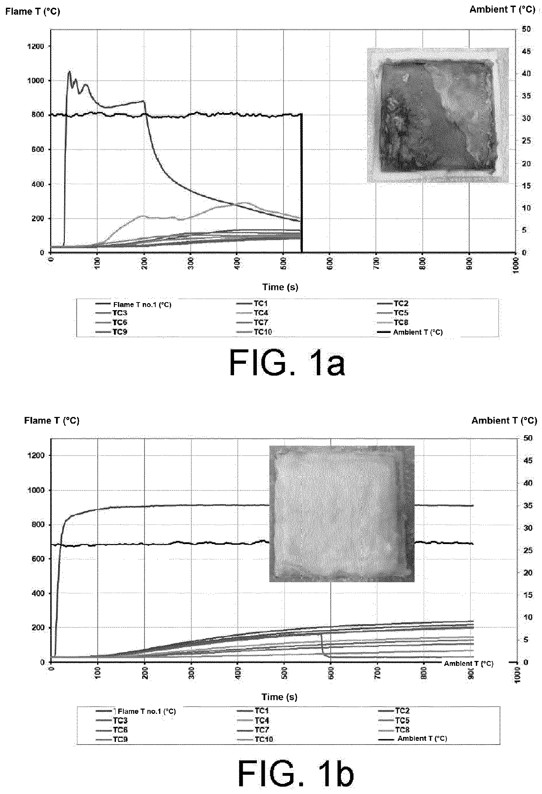

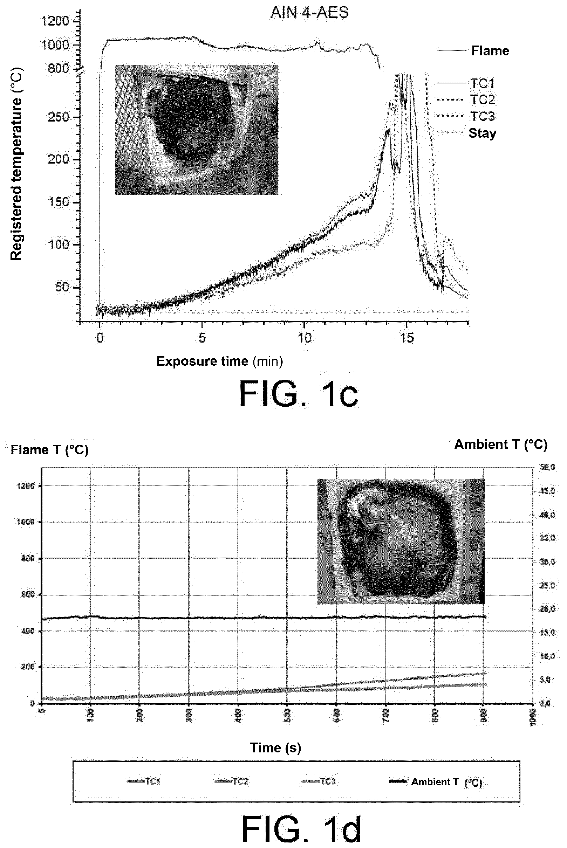

Figures 1a-d show the evolution of the temperature recorded in a CFRP panel during an ISO2685 fire test with kerosene flame and mechanical vibration, as described in the background section of the invention, for several protection materials the result of which was not successful. Figure 1a represents a protective layer of alkaline earth silicate mineral wool soluble fibre paper (AES-paper) having 15 mm, figure 1b represents a protective layer with a sheet of alkaline earth silicate mineral wool (AES-wool) having 25 mm, figure 1c represents a protective layer of alkaline earth silicate mineral wool soluble fibre paper (AES-paper) having 20 mm and figure 1d represents a multilayer consisting of a base of alkaline earth silicate mineral wool soluble fibre paper (AES-paper) having 10 mm and an intumescent coating.
Figure 2 shows the heat evolution of a CFRP base (1) protected with the multilayer structure indicated in table 1. Flame temperature and ambient temperature are added.
Figure 3 is a thermographic image of a CFRP panel (1.5 mm thick) on its reverse side at the moment prior to finishing the test.
Figures 4a-4d show an assembly sequence of a possible installation of the multilayer structure as per the invention in T-bonding lines (forming 90 degree angles) where the folding of the alkaline earth silicate mineral wool soluble fibre paper (AES-paper) by means of a 90° overlap on the T-bonding profile is observed.
Figure 5a shows a cross-sectional view of another possible installation of the multilayer structure with a fastening system for fastening a metal iron fitting to a CFRP panel protected with protective ceramic consisting of a cable gland and a fastening washer.
Figure 5b shows a perspective view of the fastening system of figure 5a. Figure 5c shows a perspective detail view of the fastening system of figure 5a.

### Detailed description of the invention

According to a practical exemplary embodiment of the invention, the designed multilayer consists of the following materials preferably stacked on a CFRP base, which could be another type of plastic or metal, in the following order (and not in another different stack):

**Table 1**

| | | |
|---|---|---|
| Layer 3 | alkaline earth silicate mineral wool (AES-wool) | 15-25 mm |
| Layer 2 | alkaline earth silicate mineral wool soluble fibre paper (AES-paper) | 5 mm |
| Layer 1 | alkaline earth silicate mineral wool soluble fibre paper (AES-paper) | 5 mm |
| On substrate or base | CFRP | Any thickness |

This example would reflect a specific case of a multilayer that meets the requirements imposed by the test according to the ISO2685 standard, resisting a liquid fuel flame at 1100 °C±80 °C, preferably kerosene, for at least 15 min, this kerosene flame providing a heat flux of 116 kW/m² (10.21 BTU/ft² s) and in the presence of mechanical vibration of 50 Hz and 0.8 mm amplitude. In addition to resisting the flame, it allows the temperature on the protected CFRP panel, on the side thereof that is opposite to the flame, to not exceed 70-100 °C after 15 minutes. All of this preferably reinforced by the use of high temperature binder for the bond between the different layers (2, 2', 3). In other words, a stack formed by these layers in that order of application on the substrate to be protected, with a bond using a high temperature binder between them.

Therefore, as mentioned above, that which provides the solution to the problem is the appropriate combination of these layers (2, 2', 3) in a specific order and thickness.

As can be seen in figures 1a-d:
- the layers that are solely made up of the alkaline earth silicate mineral wool soluble fibre paper (AES-paper) component do not resist the effect of the kerosene flame, presenting significant degradation and allowing the flame to reach the CFRP.
- the alkaline earth silicate mineral wool material (AES-wool) resists the effect of the kerosene flame and the vibration, but it does not allow the temperature of the CFRP to be preserved by itself, the temperature recorded in the CFRP reaching >220 °C.
- it has been found, however, that the heat conductivity of the multilayers based on stacks of alkaline earth silicate mineral wool soluble fibre paper (AES-paper) is even lower than those of the alkaline earth silicate mineral wool material (AES-wool).

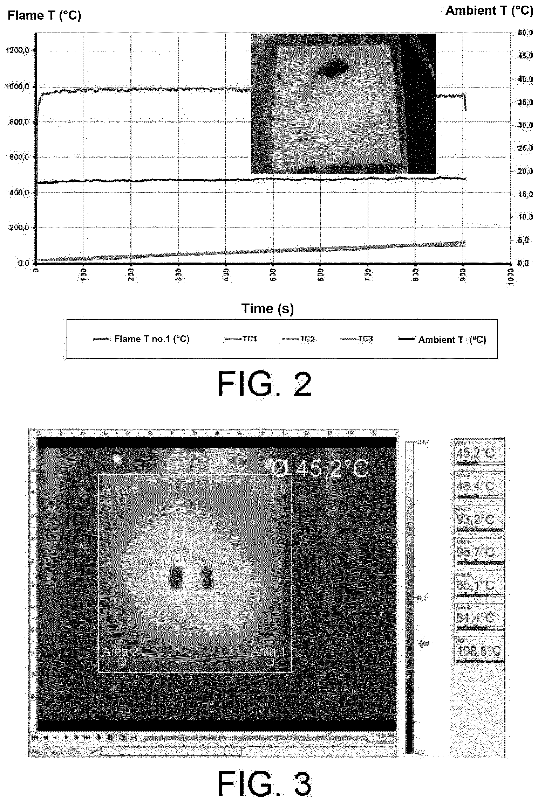

Figure 2 shows the thermal evolution of a CFRP substrate (1) that is protected with the multilayer indicated in table 1. It is observed that the temperature reached by the CFRP base material (1) does not reach 110 °C, and furthermore the damage caused to the layer itself is minimal.

Figure 3 shows a thermographic image of a CFRP base panel (1) having 1.5 mm thickness on its reverse side at the moment prior to finishing the test. The image is taken during the last seconds of the test, when the accumulated temperature is the highest. As can be seen, the average temperature of the measured area does not exceed 45 °C, and in specific areas, it does not exceed 110 °C.

Therefore, that which provides the solution to the problem is the appropriate combination of these layers (2, 2' and 3) in a specific order and thickness on the base or substrate, as in the example in table 1. This combination is that which allows a multilayer structure to be obtained that is capable of resisting the destructive effect of the kerosene flame, and maintaining an adequate heat insulation level and resistance to mechanical vibration. So that it is prevented from deteriorating due to the flame and mechanical vibration effect produced both in the ISO2685 test, as well as those specified in CS29 and CS25 standards, either due to combustion or mechanical loss.

Consequently, the multilayer structure as per the invention is suitable for aeronautical structures, allowing the replacement of conventional metals such as titanium in high-risk structures such as the engine deck of a helicopter, where fire or overheating situations may occur that rapidly degrade a plastic material as in the case of CFRP. In this way, using the multilayer structure of the invention provides safety against fire and mechanical vibrations, reducing the weight of the aircraft and offering better fatigue strength.

The mere application of the coatings according to the configuration described in Table 1 only enables a protection result as that which is described in Figures 2 and 3 if, and only if it is applied in a flat test tube format. The application of this multilayer on non-flat contours, including folds, corners, T-bonds or with other configurations requires implementation solutions that are specific for each type of relief.

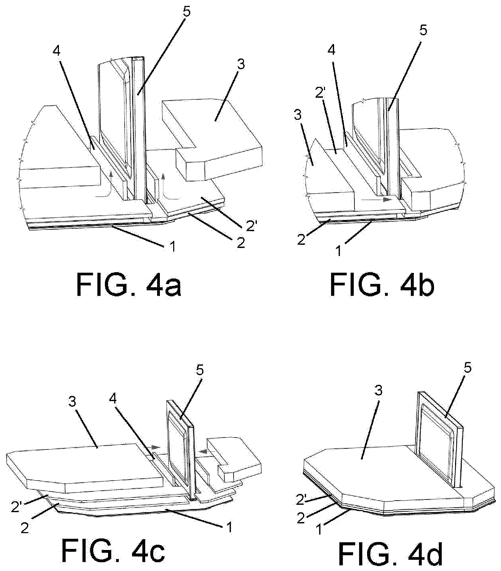

For example, Figures 4a - 4d show the installation of the multilayer structure in T-bonding lines (forming 90 degree angles) the assembly of which should preferably be carried out according to the characteristics and sequence in accordance with Figures 4a - 4d.

In this way, Figure 4a shows the manner in which, on a CFRP base (1), a first inner layer (2) of alkaline earth silicate soluble fibre paper is mounted, which, as Figure 4c shows, both portions of said first inner layer (2) fit in the vertical wall (5), with a recess made in the right portion of the first inner layer (2) in correspondence with the vertical wall (5). On said first inner layer (2), a second inner layer (2') is arranged made of alkaline earth silicate soluble fibre paper, which, as in the first inner layer (2), comprises a recess to fit into the vertical wall (5) in this case being the left portion of the second inner layer (2') that which comprises said recess. Furthermore, this second inner layer (2') comprises an overlap (4) at an angle folded 90 degrees upwards, which makes contact with the vertical wall (5). Finally, the outer layer (3) of alkaline earth silicate mineral wool is mounted on said second inner layer (2') and with the edge thereof in contact with the overlap (4). With this configuration, an overlap is made on the bonds between layers of two aligned multilayer structures that prevents heat transmission through the bonds between layers (2, 2' and 3) to the base (1) and between layers (2, 2' and 3) with the vertical wall (5).

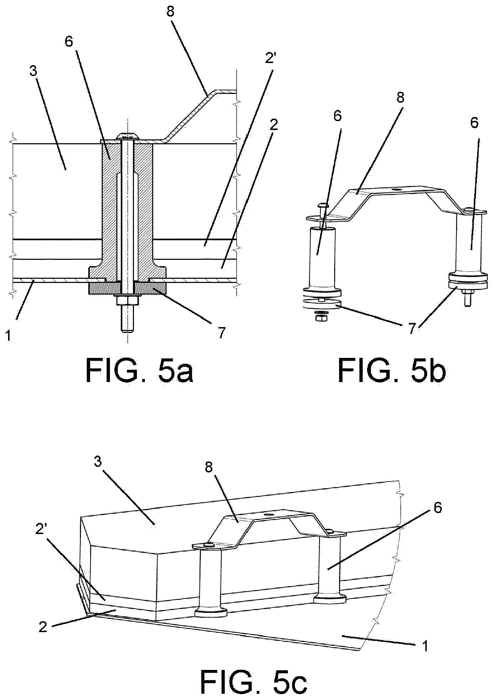

Figures 5a - 5c address the problem of installing a metal iron fitting (8) anchored on a CFRP base (1) by means of bolts or another mechanical fastening element, which is exposed to fire, but which in the event that fire occurs, does not transmit heat to the anchoring CFRP substrate or base (1). To resolve this situation, a gripping system has been designed consisting of through screws protected with ceramic cable glands. The ceramic cable gland must avoid direct contact of the metal bolt with the CFPR base (1) and therefore the transfer of heat to the floor. A possible design for the cable gland system is as that which is indicated in these figures with a ceramic bushing (6), and accompanied by a fastening washer (7) coupled to the unprotected face. The washer (7) must have a recess (female) that geometrically couples to the portion of the cable gland that protrudes from the unprotected side (male). In turn, the cable gland will be laterally surrounded by the protective multilayer structure as that which is indicated in table 1.

Preferably, for the different options proposed for installing the multilayer structure, said multilayer structure comprises at least one bonding layer between the different layers (2, 2', 3) and with the base (1). To ensure good bonding of each of the multilayer sheets, it is advisable to use high-temperature binders certified in the application industry (i.e. aerospace or others). Therefore, the layers are bonded together using high temperature binder, also applying said binder to the different fixing accessories mentioned. Preferably a flame retardant epoxy binder. In order to minimise weight, the amount determined by the manufacturer of the binder itself should be applied.

## Claims

1. A multilayer structure for a barrier to protect against fire and heat stress applied on a substrate or base such as reinforced plastic, or metal (1) comprising:
at least a first inner layer (2) of alkaline earth silicate soluble fibre paper (AES-paper) and an outer layer (3) of alkaline earth silicate mineral wool (AES-wool); **characterised in that** the first inner layer (2) has a thickness greater than or equal to 2 mm, a density less than or equal to 0.20 g/cm³ and a heat conductivity less than or equal to 0.10 W/m.K; and the outer layer has a thickness greater than or equal to 10 mm, a density less than or equal to 0.12 g/cm³ and a heat conductivity less than 0.10 W/m.K.

2. The multilayer structure according to claim 1, **characterised in that** it comprises a second inner layer (2') of alkaline earth silicate mineral wool soluble fibre paper (AES-paper) located between the first inner layer (2) of alkaline earth silicate mineral wool soluble fibre paper (AES-paper) and the outer layer (3) of alkaline earth silicate mineral wool (AES-wool).

3. The multilayer structure according to claim 1 or 2, wherein the thickness of each inner layer (2, 2') of alkaline earth silicate mineral wool soluble fibre paper (AES-paper) is less than or equal to 10mm, preferably between 3 and 6 mm; and/or the thickness of the outer layer (3) of alkaline earth silicate mineral wool (AES-wool) is less than 30, preferably between 15 and 25 mm.

4. The multilayer structure according to any one of the preceding claims, wherein the density of each inner layer (2, 2') of alkaline earth silicate mineral wool soluble fibre paper (AES-paper) is less than or equal to 0.12g/cm³; and/or the density of the outer layer (3) of alkaline earth silicate mineral wool (AES-wool) is less than or equal to 0.09 g/cm³.

5. The multilayer structure according to any one of the preceding claims, which comprises at least one bonding layer between the different inner (2, 2') and/or outer (3) layers.

6. The multilayer structure according to the preceding claim, wherein the bonding layer comprises at least one high temperature binder, preferably an epoxy resin binder, more preferably a flame retardant epoxy binder.

7. A bonding structure for bonding at least two multilayer structures according to any one of the preceding claims comprising a plurality of said multilayer structures arranged so that at least one of the respective inner and/or outer layers (2, 2', 3) of one of the multilayer structures overlaps the bond between multilayer structures of the lower layer (1, 2, 2').

8. The bonding structure for bonding an inclined panel to a multilayer structure according to any one of claims 1 to 6, comprising said multilayer structure in which at least one inner layer (2, 2') of the multilayer structure is folded at an angle according to the angle of the inclined panel for its overlapping with said panel (5).

9. The bonding structure for bonding an iron fitting (8) to a multilayer structure according to any one of claims 1 to 6, which comprises the multilayer structure and a ceramic bushing (6) passing through the layers (2, 2', 3) of the multilayer structure and the base (1) for placing a fixing bolt for fixing (8) the iron fitting.
